# EUROPEAN PATENT SPECIFICATION

(11) **EP 0 611 777 B1**
(45) Date of publication and mention of the grant of the patent: **22.04.1998**
(21) Application number: 94301090.0
(22) Date of filing: 16.02.1994
(51) Int. Cl.: C08B 30/14, C08B 31/00, A23L 1/0522

(54) **Process for preparing non hydroxypropylated, deflavored, crosslinked, pregelatinized, starch and product**
Verfahren zur Herstellung von nicht-hydroxypropylierter, desaromatisierter, vernetzter, pregelatinierter Stärke, und Produkt
Procédé pour préparer un amidon non-hydroxypropylé, désaromatisé, réticulé et prégélatinisé, et produit obtenu

(30) Priority: 16.02.1993 US 17711
(43) Date of publication of application: 24.08.1994
(73) Proprietor: KRAFT FOODS, INC., White Plains New York 10625 (US)
(72) Inventor: Katcher, Jay Harvey, Chestnut Ridge, New York 10977 (US); Bertalan, Charles William, New Brunswick, New Jersey 08901 (US)
(74) Representative: W.P. THOMPSON & CO.

(56) References cited:
- EP-A- 0 011 479
- EP-A- 0 118 753
- EP-A- 0 553 977
- US-A- 4 229 489
- US-A- 4 477 480

## Description

This invention relates to processing starch materials and products and is particularly useful for upgrading the quality of pregelatinized waxy maize starch for use in desserts.

### DESCRIPTION OF THE PRIOR ART

An alkali treatment, wash, neutralization, and spray drying of starch using a two fluid nozzle is taught in US-A-4477480. Two fluid nozzles for cooking starch are taught in US-A-4280851. EP-A-0011479 relates to a method for preparing pregelatinized modified starch, the modifier being sodium or calcium stearoyl-2-lactylate or a combination of a protein and an emulsifier.

The prior art, however, has not discovered how to make deflavored cereal starch of good viscosity and flavor without a hydroxypropylation step which produces undesired propylene chlorohydrin. Crosslinked tapioca starch is presently used when good, high viscosity, pregelatinized starch is required for puddings. Hydroxypropylated, deflavored, crosslinked, pregelatinized dent cornstarch has also been used.

### SUMMARY OF THE INVENTION

The present invention provides a process for preparing a deflavored, non-hydroxypropylated crosslinked, pre-gelatinized cereal starch comprising:
a) obtaining raw starch from cereal grain, by means of a refining process;
b) washing the raw starch with water which contains an emulsifier having an HLB value greater than 1.0;
c) dispersing and agitating the raw cereal starch in water to form a homogeneous slurry containing at least 25% starch;
d) adding a base to adjust the slurry pH to at least 11.0;
e) washing the starch solids of step (c) with water to remove flavor while maintaining the starch pH above 11.0 and while maintaining the starch solids concentration at at least 25% or more;
f) crosslinking the deflavored starch using any food-acceptable procedure;
g) neutralizing the starch to a pH of from 5.0 to 9.0, then gelatinizing and drying the neutralized starch using a process selected from the group consisting of spray-drying using a two-fluid nozzle, drum drying, and cooking in a water-miscible solvent at high temperature and pressure followed by drying, with the proviso that the starch is not hydroxypropylated.

We have discovered a process that can be used to upgrade cereal starches such as waxy maize starch and other applicable cereal starches, including corn hybrids and corn genetic varieties, such as amylo maize starch and dull waxy starch, that need deflavoring so that they may be used in instant puddings without the need for hydroxypropylation. We have discovered that for waxy maize starch deflavoring must be done before crosslinking. We have also discovered that any oil which is present on the surface of the starch granules interferes with the dispersability of the pregelatinized, crosslinked, non-hydroxypropylated starches of this invention. In US-A-5187272 it was disclosed that the addition of an emulsifier was effective to overcome the presence of the aforementioned surface oil. It was further disclosed that the emulsifier could be added to the deflavored, cross-linked, non-hydroxypropylated starch either before or after the starch is dried.

It has now been found that a comparable result can be achieved by modifying the starch refining process so that a raw cereal starch material is produced which contains little or no surface oil. This result can be effected by adding an emulsifier during one of the washing steps normally present in starch refining processes. The presence of an emulsifier during the washing step would substantially remove the oily film surrounding the starch granules and/or leave a residual film of emulsifier on the surface of the starch granules. Raw starch granules produced in this manner may thereafter be deflavored and cross-linked and dried in accordance with the teachings of our prior invention.

Accordingly, the emulsifier-treated, refined, raw starch is dispersed in water, the pH is then adjusted to at least 11.0 with alkali, and the starch material is then washed with water to remove flavor or flavor precursors that would become apparent during storage of a starch, such as waxy maize starch, which was not washed before the chemical treatment.

The alkaline-treated and deflavored starch is next crosslinked, neutralized and thereafter pregelatinized and dried. Pregelatinization may be effected by cooking in a two-fluid, spray-drying nozzle, as described in the aforementioned Pitchon, et al. patent. Alternatively, pregelatinization and drying may be effected by drum drying the delivered, crosslinked starch material or by cooking the delivered, pregelatinized starch material or by cooking the delivered, pregelatinized starch material in a water-miscible solvent at high temperature and pressure and then drying, such as by means of alcohol precipitation followed by oven drying.

The process of this invention will be described below in connection with the use of the two-fluid, spray-drying nozzle which represents the preferred method for pregelatinization and drying; however, as noted above this invention is not limited to the use of this specific technique.

We have found the resulting product to be free from objectionable flavor development during storage, and are of suitable viscosity and wetting ability so as to be usable in instant pudding mixes in place of crosslinked pregelatinized tapioca starch or hydroxypropylated dent corn starch.

### DETAILED DESCRIPTION OF THE INVENTION

Waxy maize grain delivered to the mill is processed in a conventional manner. Thus, the grain may be cleaned, soaked in warm water and after sufficient hydration has been effected the grain is coarsely wet milled in order to remove germs from the hulls. The germ is then separated from what remains of the grain, such as by passage over screens. The coarse grist which contains hulls, fiber and particles of endosperm is then subjected to fine grinding to loosen the starch granules from the gluten. The remaining slurry of starch and gluten is then subjected to any of various separation processes which typically result in flotation of the gluten and sedimentation of the starch or centrifugal separation of the starch. The separated starch granules are thereafer washed with water, such as by spraying, in order to remove gluten from the surface of starch granules. After washing, the starch is denatured and then optionally dried and held for further processing. In accordance with this invention the washing of the separated starch is done with emulsifier-containing water. Typically the wash water will contain from 0.01 to 2% by weight of emulsifier, preferably from 0.05 to 1%. The washed starch may then typically retain a small amount, usually less than 0.1% by weight, of emulsifier on its surface.

Any food-approved emulsifier will work provided the HLB value is greater than 1.0 and the emulsifier is present at levels high enough to overcome the tendency of the starch to clump. Polysorbate 60 at about 0.5% of the starch by weight is suitable. Typical useful emulsifiers include the sorbitan esters, ethoxylated mono and diglycerides, propylene glycol esters and lactylated esters. These emulsifiers are used as examples but in no way limit the use of other food grade emulsifiers as long as they function to enhance the dispersion of the pregelatinized starch produced in this manner. The emulsifiers are preferably employed at levels from 0.1 to 1.0% of the starch.

The optionally dried, emulsifier-treated raw starch is then further processed in accordance with our prior invention.

A homogenous waxy maize starch slurry is formed by adding sufficient water to the emulsifier-treated starch so that the resulting slurry concentration is preferably at least 25%, typically 35-45% starch. For economic reasons, starch concentrations are kept as high as possible during processing.

Alkaline material is added to bring the slurry pH to 11.3 to 12.0, preferably pH 11.4-11.8. Any suitable base selected from the group consisting of salts and hydroxides of the alkali metals, alkaline-earth metals, ammonium and organic alkalis or mixtures thereof can be employed although we prefer alkali hydroxides. Alkali hydroxides are added in a 1 to 10% concentration, preferably 3% to the slurry. If the alkali hydroxide concentration is too high, the starch slurry would exhibit localized gelling. This would render the starch slurry unusable unless these gel lumps are screened from the slurry. If the alkali hydroxide is too low in concentration, too much liquid is added to the starch slurry negatively effecting processing economics.

Once the starch dispersion pH is adjusted, we allow the dispersion to mix for at least five minutes to allow flavor materials and flavor precursors to be freed from the starch. Normally, the higher the pH, the shorter the treatment time for flavor removal. Higher pH is possible up to the pasting pH which is normally around pH 12.4 or 12.5.

The starch is washed with water to remove residual flavor and flavor precursors while maintaining the starch at pH 11.0 or greater. Any conventional washing techniques can be employed so long as the pH is maintained at or above 11.0, preferably 11.3 or greater and more preferably pH 11.4 to 11.8. The starch slurry concentration after washing should be 25% solids or greater for economy reasons, preferably 35-45% solids. We have found a Merco brand washing centrifuge by Dorr-Oliver Co. gives good results.

The The starch is next crosslinked using conventional food-acceptable crosslinking agents such as phosphorus oxychloride, sodium trimetaphosphate and epichlorohydrin We prefer to employ up to 0.1% phosphorus oxychloride depending on the viscosity of the product desired.

The crosslinked starch is next neutralized using a food-grade acid such as organic and inorganic acids. We prefer citric acid, hydrochloric acid, phosphoric acid, sulfuric acid and mixtures thereof particularly phosphoric acid. We neutralize the starch to pH 5.0- 9.0, preferably a pH between 6-8 or 7.5-9.0. Often, pH 5-6.5 or pH 7.5-9.0 is desirable. For viscosity stability and powder color quality, pH of 5.0-6.5 is employed. For cereal starches with difficult to remove flavors, a pH of 7.5-9.0 is required to insure that flavor remains acceptable during storage. Final pH range depends upon the situation encountered. In this situation a pH of 5.0-6.5 is preferred. In all cases, the starch slurry can be neutralized by adding the acid, preferably at a concentration which will not overly dilute the slurry.

The starch is next gelatinized, such as by the use of the two-fluid nozzle disclosed in US-A-4 280 851 at Figures 5 and 6. According to this technique, the starch slurry at 25% solids for economic reasons, preferably 35%-45% solids is treated with the steam impinging on the starch granules within the spray nozzle to cook the starch.

The cooked starch leaving the two fluid nozzle chamber may be dried in a spray drier using conventional conditions, as described in US-A-4 280 851.

The dry product may be ground and sieved to give any size product. The final product is a storage-stable, good tasting, high-viscosity, non-hydroxypropylated, crosslinked, pregelatinized starch useful for instant pudding powdered mixes or other products which are to be incorporated into cold aqueous mediums, such as milk. We do not need to use alkali or alkaline earth salts such as sulfates or chlorides during the crosslinking process and do not need to employ a hydroxypropoxylation step. Conventional crosslinking is sufficient with prior alkali washing and addition of an emulsifier to produce a quality product.

This invention is further described but not limited by the following examples.

### COMPARATIVE EXAMPLE 1

25,000 gallons (946353 l) of waxy maize starch slurry, containing 100,000 pounds (45359.24 kg) of dry solids, was introduced into a mixing vessel under high agitation. A 3% sodium hydroxide solution was slowly added to the vortex of the starch slurry. The 3% sodium hydroxide solution was added slowly until a pH of 11.5 was reached. Sixty-six pounds (29.94 kg) of phosphorous oxychloride was added to the slurry's vortex and allowed to mix for 1 hour to crosslink the starch. The starch slurry was deflavored, as taught in U.S. Patent No. 4,477,480 by washing with water with a Dorr-Oliver Model C-30W centrifuge. Slurry concentration dropped to 32% solids after deflavoring. The slurry was neutralized to a pH of 6.0 by the addition of phosphoric acid. This material was pregelatinized, as taught in US-A-4 280 851 by spray-cooking and drying. The material was ground and screened to proper particle size as taught in US-A-4 438 148. The starch on storage developed off-flavors which made its use in vanilla or chocolate instant puddings unattractive. Pudding mixes containing this starch were found to clump when prepared with cold milk.

### COMPARATIVE EXAMPLE 2

The process set forth previously is repeated except that the starch is washed after the pH is raised to 11.5 with 3% aqueous sodium hydroxide as taught in US-A-4 477 480 using a Dorr-Oliver washing centrifuge while maintaining the starch pH above 11.0. The starch is then crosslinked by adding the same amount of phosphorous oxychloride to the slurry and mixing for one hour and, thereafter, is neutralized to pH 6 using phosphoric acid. The material is then pregelatinized by spray drying using a two-fluid nozzle described in US-A-4 280 851. The dry starch may be ground if necessary and screened to a desired particle size. No off flavors were developed during storage.

Pudding mixes containing this starch were found to clump when prepared with cold milk.

### COMPARATIVE EXAMPLE 3

250 gallons (946.35 l) of waxy maize starch slurry, containing 1,000 pounds (453.59 kg) of dry solids, was introduced into a mixing vessel under high agitation. A 3% sodium hydroxide solution was added to the vortex of the starch slurry. The 3% sodium hydroxide solution was added slowly until a pH of 11.5 was reached. The starch slurry was deflavored, as taught in US-A-4 477 480 by washing the slurry with water with a Dorr-Oliver centrifuge. The slurry concentration dropped to 34% solids after the deflavoring step. The slurry pH after washing was above pH 11.2. The starch was crosslinked by adding 0.66 pounds (0.30 kg) of phosphorous oxychloride to the slurry vortex. The slurry was mixed for one hour then the pH was neutralized to 6.0 by the addition of phosphoric acid into the vortex. This material was pregelatinized as taught in US-A-4 280 851 and ground and screened to a useful particle size as taught in US-A-4 438 148.

When used in an instant pudding mix, the resultant prepared pudding had good viscosity, mouthfeel and flavor. As before, pudding texture was poor due to poor dispersion. Even if the puddings were prepared with a coarser granulation pregelatinized waxy maize starch where the -400 mesh (<38µm) fraction was removed and the starch granulation was essentially 100% between a U.S. 200 mesh (<75µm) and U.S. 400 mesh (>38µm) fraction, dispersion remained poor when puddings were prepared.

This starch was coated with 0.5% polysorbate 60. When the starch coated with polysorbate 60 was used in an instant pudding mix, the resultant prepared pudding had the desirable texture (smooth, continuous, homogeneous, non-grainy), high sheen appearance, mouthfeel and viscosity as is characteristic of puddings prepared with heavily modified starches (e.g. substituted) as taught in US-A-4 847 371 or crosslinked tapioca starch which does not have to be deflavored as taught in US-A-4 477 480 and does not have the dispersibility problem of crosslinked waxy maize pregelatinized as taught in US-A-4 280 851. If waxy maize is hydroxypropylated and crosslinked, there are no dispersibility or flavor problems as encountered with only crosslinked waxy maize. However, the hydroxypropylation process is time consuming, equipment intensive, adds chemical cost and has a propylene chlorohydrin residue.

The process of this invention produces a low cost crosslinked waxy maize starch that disperses easily in cold milk and is storage stable as to flavor and precludes the need to use expensive tapioca starch. Pudding bases prepared with starch material from this Example 3 remained good tasting and free of off flavor during storage.

The emulsifier (e.g. polysorbate 60) can be added to the slurry prior to the pregelatinization step (spray cooking and drying) and will function in a similar manner to the coating process previously described. By adding the emulsifier to the slurry prior to spray cooking and drying, a separate processing step can be eliminated.

Further, the emulsifier could be added during refining of the raw starch, such as in the wash water used to remove gluten from the surface of separated starch granules. In this manner, the raw starch material which is deflavored and then cross-linked according to this invention will not have to be treated with emulsifier during the modification process.

### EXAMPLE 4

The same waxy maize starch as is used in Example 3 is washed with a wash water to remove gluten from the surface of separated starch granules. This wash water contains an emulsifier, e.g. polysorbate 60. The thus treated raw starch material is thereafter treated by the same method as described in Example 3 except that the final step of coating with 0.5% polysorbate 60 is omitted. A product with similarly good properties is obtained.

## Claims

1. A process for preparing a deflavored, non-hydroxypropylated crosslinked, pre-gelatinized cereal starch comprising:
a) obtaining raw starch from cereal grain, by means of a refining process;
b) washing the raw starch with water which contains an emulsifier having an HLB value greater than 1.0;
c) dispersing and agitating the raw cereal starch in water to form a homogeneous slurry containing at least 25% starch;
d) adding a base to adjust the slurry pH to at least 11.0;
e) washing the starch solids of step (c) with water to remove flavor while maintaining the starch pH above 11.0 and while maintaining the starch solids concentration at at least 25% or more;
f) crosslinking the deflavored starch using any food-acceptable procedure;
g) neutralizing the starch to a pH of from 5.0 to 9.0, then gelatinizing and drying the neutralized starch using a process selected from the group consisting of spray-drying using a two-fluid nozzle, drum drying, and cooking in a water-miscible solvent at high temperature and pressure followed by drying, with the proviso that the starch is not hydroxypropylated.

2. A process according to claim 1, in which the washed starch of step b) is dried before the dispersal step c) is carried out.

3. A process according to claim 1 or claim 2, wherein the starch is gelatinized and dried by spray-drying a starch slurry having a concentration of at least 25% solids.

4. A process according to any one of claims 1 to 3, in which the wash water of step b) contains from 0.01 to 2.0% by weight emulsifier.

5. A process according to claim 4, wherein the wash water of step b) contains from 0.05 to 1.0% by weight emulsifier.

6. A process according to claim 4 or claim 5, in which the emulsifier is selected from sorbitan esters and ethoxylates or mono and diglycerides, propylene glycol esters, lactylated esters and combinations thereof.

7. A process according to any one of claims 1 to 6, in which the starch is crosslinked by reacting with a member selected from phosphorus oxychloride, sodium trimetaphosphate, epichlorohydrin, acrolein or adipic anhydride.

8. A process according to any one of claims 1 to 7, in which the starch is crosslinked using phosphorus oxychloride.

9. A process according to any one of claims 1 to 8, in which the starch is waxy maize starch.

10. A process according to any one of claims 1 to 9, in which the pH is adjusted using a base selected from salts or hydroxides of the alkali metals, alkaline earth metals, ammonium and organic alkalis or mixtures thereof.

11. A process according to any one of claims 1 to 10, in which the crosslinked starch is neutralized to pH 5-9 with an acid selected from the group consisting of citric acid, hydrochloric acid, phosphoric acid, sulfuric acid and mixtures thereof.

## Patentansprüche

1. Verfahren zur Herstellung von desaromatisierter, nicht-hydroxypropylierter, vernetzter, pregelatinierter Getreidestärke, das
a) Gewinnen von Rohstärke aus Getreidekörnern durch ein Raffinationsverfahren;
b) Waschen der Rohstärke mit Wasser, das einen Emulgator mit einem HLB-Wert von größer als 1,0 enthält;
c) Dispergieren und Rühren der Rohgetreidestärke in Wasser unter Bildung einer homogenen Aufschlämmung, die mindestens 25% Stärke enthält;
d) Zusetzen einer Base, um den Aufschlämmungs-pH auf mindestens 11,0 einzustellen;
e) Waschen der Stärkefeststoffe aus Schritt c) mit Wasser, um Aromastoffe zu entfernen, während der Stärke-pH über 11,0 gehalten wird und während die Konzentration der Stärkefeststoffe bei mindestens 25% oder mehr gehalten wird;
f) Vernetzen der desaromatisierten Stärke unter Anwendung eines für Lebensmittel geeigneten Verfahrens;
g) Neutralisieren der Stärke auf einen pH zwischen 5,0 und 9,0, dann Gelatinieren und Trocknen der neutralisierten Stärke unter Anwendung eines Verfahrens, das aus der Gruppe bestehend aus Sprühtrocknung unter Verwendung einer Zweistoffdüse, Trommeltrocknung und Kochen in einem mit Wasser mischbaren Lösungsmittel bei hoher Temperatur und Druck mit anschließender Trocknung ausgewählt wird, unter der Voraussetzung, daß die Stärke nicht hydroxypropyliert ist,
umfaßt.

2. Verfahren nach Anspruch 1, in dem die gewaschene Stärke aus Schritt b) getrocknet wird, bevor der Dispersionsschritt c) durchgeführt wird.

3. Verfahren nach Anspruch 1 oder Anspruch 2, in dem die Stärke durch Sprühtrocknung einer Stärkeaufschlämmung, die eine Konzentration von mindestens 25% Feststoffe hat, gelatiniert und getrocknet wird.

4. Verfahren nach einem der Ansprüche 1 bis 3, in dem das Waschwasser aus Schritt b) 0,01 bis 2,0 Gew.-% Emulgator enthält.

5. Verfahren nach Anspruch 4, in dem das Waschwasser aus Schritt b) 0,05 bis 1,0 Gew.-% Emulgator enthält.

6. Verfahren nach Anspruch 4 oder 5, in dem der Emulgator unter Sorbitanestern und Ethoxylaten oder Mono- und Diglyceriden, Propylenglykolestern, lactylierten Estern und Kombinationen daraus ausgewählt wird.

7. Verfahren nach einem der Ansprüche 1 bis 6, in dem die Stärke vernetzt wird, indem mit einem Glied, ausgewählt unter Phosphoroxychlorid, Natriumtrimetaphosphat, Epichlorhydrin, Acrolein oder Adipinsäureanhydrid, umgesetzt wird.

8. Verfahren nach einem der Ansprüche 1 bis 7, in dem die Stärke unter Verwendung von Phosphoroxychlorid vernetzt wird.

9. Verfahren nach einem der Ansprüche 1 bis 8, in dem die Stärke wachsartige Maisstärke ist.

10. Verfahren nach einem der Ansprüche 1 bis 9, in dem der pH unter Verwendung einer Base, die aus Salzen oder Hydroxiden der Alkalimetalle, Erdalkalimetalle, Ammonium und organischen Alkali oder Gemischen der genannten ausgewählt wird, eingestellt wird.

11. Verfahren nach einem der Ansprüche 1 bis 10, in dem die vernetzte Stärke mit einer Säure, die aus der Gruppe bestehend aus Citronensäure, Salzsäure, Phosphorsäure, Schwefelsäure und Gemischen der genannten ausgewählt wird, auf pH 5 bis 9 neutralisiert wird.

## Revendications

1. Procédé pour préparer un amidon de céréale désaromatisé, non hydroxypropylé, réticulé, prégélatinisé, comprenant les étapes consistant à :
a) obtenir de l'amidon brut à partir de grain de céréale, au moyen d'un traitement de raffinage ;
b) laver l'amidon brut avec une eau qui contient un émulsifiant ayant une valeur HLB (rapport hydrophile-lipophile) supérieure à 1,0 ;
c) disperser et agiter l'amidon brut de céréale dans de l'eau pour former une suspension homogène contenant au moins 25 % d'amidon ;
d) ajouter une base pour régler le pH de la suspension à au moins 11,0 ;
e) laver les matières solides d'amidon de l'étape (c) avec de l'eau pour éliminer l'arôme tout en maintenant le pH de l'amidon au-dessus de 11,0 et tout en maintenant la concentration en matières solides d'amidon à au moins 25 % ou plus ;
f) réticuler l'amidon désaromatisé en utilisant tout mode opératoire acceptable dans l'alimentaire ;
g) neutraliser l'amidon à un pH de 5,0 à 9,0, puis gélatiniser et sécher l'amidon neutralisé en utilisant un procédé choisi dans le groupe constitué par le séchage par pulvérisation en utilisant une buse à deux fluides, le séchage au tambour, et la cuisson dans un solvant miscible à l'eau à température et pression élevées, suivie d'un séchage, avec la condition que l'amidon ne soit pas hydroxypropylé.

2. Procédé selon la revendication 1, dans lequel l'amidon lavé de l'étape b) est séché avant d'effectuer l'étape de dispersion c).

3. Procédé selon la revendication 1 ou la revendication 2, dans lequel l'amidon est gélatinisé et séché en séchant par pulvérisation une suspension d'amidon ayant une concentration d'au moins 25 % de matières solides.

4. Procédé selon l'une quelconque des revendications 1 à 3, dans lequel l'eau de lavage de l'étape b) contient de 0,01 à 2,0 % en poids d'émulsifiant.

5. Procédé selon la revendication 4, dans lequel l'eau de lavage de l'étape b) contient de 0,05 à 1,0 % en poids d'émulsifiant.

6. Procédé selon la revendication 4 ou la revendication 5, dans lequel l'émulsifiant est choisi parmi les esters de sorbitane, les mono et diglycérides éthoxylés, les esters de propylèneglycol, les esters lactylés et des combinaisons de ceux-ci.

7. Procédé selon l'une quelconque des revendications 1 à 6, dans lequel l'amidon est réticulé par réaction avec un ingrédient choisi parmi l'oxychlorure de phosphore, le trimétaphosphate de sodium, l'épichlorhydrine, l'acroléine et l'anhydride adipique.

8. Procédé selon l'une quelconque des revendications 1 à 7, dans lequel l'amidon est réticulé en utilisant de l'oxychlorure de phosphore.

9. Procédé selon l'une quelconque des revendications 1 à 8, dans lequel l'amidon est de l'amidon de maïs cireux.

10. Procédé selon l'une quelconque des revendications 1 à 9, dans lequel le pH est réglé en utilisant une base choisie parmi les sels et hydroxydes des métaux alcalins, des métaux alcalino-terreux, d'ammonium et d'alcalis organiques, ou des mélanges de ceux-ci.

11. Procédé selon l'une quelconque des revendications 1 à 10, dans lequel l'amidon réticulé est neutralisé à pH 5 à 9 avec un acide choisi dans le groupe constitué par l'acide citrique, l'acide chlorhydrique, l'acide phosphorique, l'acide sulfurique et des mélanges de ceux-ci.
